# EUROPEAN PATENT APPLICATION

(11) **EP 4 667 071 A1**
(43) Date of publication of application: **24.12.2025**
(21) Application number: 25182521.2
(22) Date of filing: 12.06.2025
(51) Int. Cl.: A63F 13/355, A63F 13/52, A63F 13/67, G06T 15/00

(54) **METHOD OF RENDERING GRAPHICS FOR A VIDEO GAME**

(30) Priority: 13.06.2024 GB 202408509
(71) Applicant: Sony Interactive Entertainment Inc., Tokyo 108-0075 (JP)
(72) Inventor: BIGOS, Andrew, London, W1F 7LP (GB); WALKER, Andrew, London, W1F 7LP (GB); COCKRAM, Philip, London, W1F 7LP (GB); LEONARDI, Rosario, London, W1F 7LP (GB); ARMSTRONG, Calum, London, W1F 7LP (GB); SANDERS, Matthew, London, W1F 7LP (GB)
(74) Representative: Gill Jennings & Every LLP

(57) **Abstract**

A method of rendering graphics for a video game, which comprises: assigning, to each of a plurality of objects in a frame to be rendered, an importance level of the object; determining, based on the importance levels, one or more rendering quality resource restrictions to be applied to at least some of the plurality of objects; and rendering the frame, wherein the plurality of objects are rendered in accordance with the rendering quality resource restrictions.

## Description

### FIELD OF THE INVENTION

This invention relates to techniques for rendering graphics for a video game.

### BACKGROUND

Modern video games feature complex three-dimensional (3D) graphics. Video game developers are employing increasingly detailed models and textures and sophisticated graphics rendering techniques such as spectral rendering and ray tracing to produce realistic, immersive renderings of 3D scenes. Video games are thus demanding increasingly more graphical processing power, for which reason dedicated graphics processing units (GPUs) have become common in games consoles and gaming computers. Nonetheless, most consumer gaming systems suffer deteriorations in performance when attempting to render complex scenes of the kind just described. Therefore, in practice, most gaming systems are configured to moderate various aspects of the rendering process in order to maintain an acceptable framerate. However, this often leads to a perceptible reduction in the quality of rendered graphics - for example, resources may be spared by performing a reduced level of antialiasing, but this will result in the player perceiving more jagged edges and therefore experiencing a less realistic, less immersive visual environment. There is hence a need for techniques for improving performance which do not severely detract from the player's experience.

### SUMMARY OF INVENTION

The invention provides a method of rendering graphics for a video game, the method comprising: assigning, to each of a plurality of objects in a frame to be rendered, an importance level of the object; determining, based on the importance levels, one or more rendering resource restrictions to be applied to at least some of the plurality of objects; and rendering the frame, wherein the plurality of objects are rendered in accordance with the rendering resource restrictions.

In this method, a plurality of objects that appear in a frame to be rendered are assigned respective importance levels. The term "object" here refers to any visual asset that will appear in the frame to be rendered. Typical examples of such objects are assets represented by 3D models such as a player-controlled character, non-player characters (NPCs) and objects of scenery, but other visual assets such as a head-up display elements (such as a health bar or a speedometer) may also be regarded as "objects" for this purpose. Based on the importance levels of the objects, one or more rendering resource restrictions are applied. Typically, the rendering resource restrictions will be such that the lower an object's importance (as represented by its assigned importance level), the more severe the rendering resource restrictions that will be applied to it. It should be noted that not every one of the plurality of objects will necessarily be subject to the rendering resource restrictions - it is envisaged for example that the most important objects in a frame (e.g. the player-controlled character or a boss monster) may not be subject to any rendering resource restrictions, since these objects will typically be the focus of the player's attention and will therefore have the greatest influence on the image quality perceived by the player. It will also be appreciated that different rendering resource restrictions may be applied to different objects: for example, the restrictions applied to one object could entail a limitation on the post-processing effects applied to that object while for another object the restrictions could entail streaming a lower-detail model of the object from a remote server. Examples of rendering resource restrictions will be described in detail below.

The importance level of each object will typically be a numerical parameter or flag. For example, the importance level could be a flag set to either "important" or "unimportant", in which case the rendering resource restrictions could be applied to the objects flagged as unimportant. In another example, the importance level could be a numerical parameter the value of which varies with the importance of the object - for example, the importance level of each object could be in the range of 0 to 100, with a value of 100 being assigned to the most important objects, indicating that no rendering resource restrictions are to be applied to those objects and lower values indicating increasingly more severe rendering resource restrictions. A numerical parameter representing a scale (e.g. 0-100) is typically preferred because the importance of each object can be placed on such a scale in accordance with continuous parameters such as spatial distance from the player's location, the speed of the object, and the lighting conditions applied to the object.

Examples of techniques for determining the importance levels will be described later but, in general, the purpose of the importance levels is to represent the significance of an object as perceived by the player. The inventors have realised that players tend to concentrate their attention on certain, important features and regions of the scene being rendered, such as significant NPCs and head-up display elements. Consequently, the player's perception of the visual quality of the rendered scene depends strongly on the visual quality of these important objects and regions but is less influenced by the appearance of less "important" objects such as items of scenery, even where these less important objects occupy a comparable portion of the area of the screen. Therefore, by the method of this invention, the resources allocated for rendering of the lower-importance objects can be reduced without significantly affecting the perceived quality of the rendered graphics. The perceived quality of the rendered scene can thus be improved without demanding additional graphics processing resources.

Typically, the method takes place during runtime of the video game, for example during gameplay involving one or more players. It will be appreciated that frames are rendered many times per second during gameplay (e.g. for a typical framerate of 60 Hz, a new frame is rendered every 1/60 of a second). Therefore, the frame rendered in the final step of the method defined above will typically be one of a sequence of frames. The method may involve rendering a plurality of consecutive frames in accordance with the rendering resource restrictions. This plurality of consecutive frames could be a predetermined number of frames or all the frames falling within a predetermined time interval (which may differ from one another since the framerate that is achieved in practice typically varies over time). For example, all the frames in the next 0.1 seconds, or the next 6 frames, may be rendered in accordance with the same rendering resource restrictions after the rendering resource restrictions have been determined. The importance levels and rendering resource restrictions would then be re-determined for the next interval.

In some preferred implementations, at least some of the plurality of objects are tagged with metadata representing their respective importance, and wherein the importance level assigned to each of said objects is determined based on the metadata with which said object is tagged. This allows the importance of objects in a particular scene (e.g. a level in the game) to be specified by the developers when designing the scene. For example, important NPCs and objects that the player is required to interact with might be tagged with metadata signifying that these objects are important whereas objects that simply serve as scenery in that scene would be tagged with metadata indicating a lower level of importance. It will be appreciated that the same object might be assigned different importance levels in different scenes: for example, the player might be required to use a crate to solve a puzzle in one level, in which case the crate would be assigned a relatively high importance level, whereas in another level a crate of the same appearance could be used simply as scenery. The same object may thus be tagged with different importance levels in different scenarios, and the metadata provides a straightforward way of enabling the developers to control these importance levels.

In some embodiments, the importance levels assigned to at least some of the objects are determined based on physics data associated with the objects. An example of physics data is the speed of the object. The player will generally be less able to perceive fine details of objects that are moving quickly, so the degree of detail in which a fast-moving object is rendered can be reduced without significantly affecting the visual quality perceived by the player. Therefore, it can be advantageous to determine the importance levels of the objects based on physics data such as their speed. Typically, the physics data comprise at least one of a movement speed of the object, preferably a movement speed of the object transverse to the frame, an acceleration rate of the object, and a rotational speed of the object. In these implementations, objects with greater speeds, acceleration and rotational speeds will typically be assigned lower importance levels.

In some preferred implementations, the rendering of the frame is performed in accordance with a rendering pipeline comprising a plurality of stages, wherein the importance level of at least some of the objects is determined based on output data generated by one or more stages of the rendering pipeline generated when rendering one or more earlier frames. Stages typically present in rendering pipelines include a vertex shader, primitive assembly, rasterization, and fragment shading. Post-processing effects such as motion blur, bloom and depth of field effects may also be part of the pipeline. Some of the effects produced by stages of a graphics pipeline affect the degree of detail that the player is able to perceive in the final, rendered object: examples include motion blur, which obscures fine details by blurring the object, and lighting effects such as shadow and ambient occlusion, which often reduce the brightness of some objects and therefore cause them to be less perceptible. It is therefore advantageous to assign lower importance levels to (and thus restrict the graphical processing resources available to) objects that are subject to effects which cause their finer details to be less perceptible. This can spare resources - for example by avoiding rendering highly detailed textures for an object that will be motion blurred - while not causing any significant noticeable decrease in visual quality. As just mentioned, motion blur is a significant example of a stage of a rendering pipeline in this context, so preferably the output data comprises motion blur data generated for each of the plurality of objects by a motion blur shader stage of the rendering pipeline, and wherein the importance levels assigned to the plurality of objects are such that objects for which the motion blur data indicates a greater relative degree of motion blurring are assigned relatively lower importance values.

In some preferred implementations, the importance levels assigned to at least some of the objects are determined based on the transverse distance between the object and a key object in the frame or a key region of the frame, such that objects at relatively greater transverse distances from the key object are assigned relatively lower importance levels. By "transverse distance", we mean the distance within the plane of the frame (as opposed to distance in the direction perpendicular to the frame). Since key objects such as boss monsters or key regions such as head-up display elements (e.g. a speedometer or health bar) will exert a strong pull on the player's attention, the player will tend to focus on the region of the frame in which these objects appear. Consequently, they may tend to perceive the visual quality of the objects in close proximity to these key objects more than that of objects that are at greater transverse distances from the key objects. The importance of an object may thus be determined based on its transverse distance from the key object(s) in the frame, with objects at greater distances from the key object(s) being assigned lower levels of importance. The key objects could be identified by metadata with which they are tagged, the metadata indicating that the object is a key object.

The importance levels assigned to at least some of the objects may be determined based on measurements of the direction of a player's vision relative to a screen on which the graphics are displayed, the measurements preferably comprising eye tracking data, such that objects at relatively greater distances from the centre of the player's vision are assigned relatively lower importance levels. The direction of the player's vision could be measured using a device such as a webcam.

In some preferred embodiments, models for at least some of the plurality of objects are streamed from a remote database comprising several versions of each of said models, each version of the model for one of the objects having a different level of detail relative to the other versions of said model, and wherein the rendering resource restrictions applied to said objects comprise a limitation on the level of detail of the version of the model that is streamed for the object. This is advantageous since it reduces the network bandwidth required to stream the models from the remote database and, moreover, spares graphics processing resources since the lower-detail models are less computationally expensive to render. Streaming of game assets is becoming increasingly common as a way of limiting the space that games occupy on the hard drive of a user's computer or games console, so these embodiments are particularly advantageous in this scenario.

In some preferred implementations, the rendering resource restrictions comprise an indication that, for at least some of the objects to which the rendering resource restrictions are applied, metadata describing the objects is to be streamed from a remote database; and wherein rendering the frame comprises streaming the metadata describing the objects from the remote database, producing a model for the object based on the metadata and rendering the object based on the generated model. This implementation is advantageous in scenarios in which, conventionally, models for at least some of the objects in the frame would be streamed (typically over the internet) from a remote database. In this scenario, the rendering resource restrictions indicate that, instead of streaming a complete model for the object to which the restrictions are applied, metadata describing the object is streamed. This metadata is used to produce a model locally (e.g. on the system on which the rendering is being performed), which enables the object to be rendered without streaming a complete model for the object over the internet. This reduces the streaming bandwidth required in to render the frame. For example, the metadata may identify that the object represents a tree or other object of scenery, which enables a suitable model to be produced based on the information contained in the metadata. This approach is particularly advantageous when the rendering resource restrictions are determined based on metadata with which the objects are tagged indicating their relative importance as described above - for example, for objects tagged as "unimportant", metadata may be streamed instead of complete models.

The rendering resource restrictions may comprise requiring that, for a specified object, the rendering of that object is to be performed using a two-dimensional (2D) model (rather than a conventional 3D model). Particularly for objects such as distant objects of scenery, a 2D model may be used without much perceptible loss of quality. This is particular advantageous where the model is streamed from a remote database since the data size of a 2D model will be significantly less than that of the corresponding 3D model.

Preferably, the streamed metadata comprises one or more of dimensions of the object, colour information of the object, information identifying one or more textures to be applied to the object. This information enables a suitable model for the object to be produced, which may comprise retrieving the model from local storage or generating the model based on the metadata. In implementations in which producing the model comprises retrieving the model from local storage (which may contain, for example, a selection of stock models), producing the model may further comprise modifying the retrieved model based on the metadata. The transformations may include one or more of changing the spatial dimensions of the model, colours contained in the model, or applying textures to the model. The metadata may also include descriptive information defining properties of the objects such as "tree" and "oak", which may be employed in the selection or generation of a suitable model.

In the case in which the model is generated based on the metadata, generating the model may comprise using a machine learning model to generate the model for the object based on the metadata. Machine learning models are particularly suitable for producing unique models based on complex input information, which helps to produce immersive graphics while achieving the reducing in bandwidth requirement associated with streaming metadata in place of a model as described above.

In other implementations, generating the model based on the metadata may comprise constructing the model at least in part from a set of model parts stored locally, wherein preferably the metadata defines one or more of spatial transformations, colours and textures to be applied to the model parts during generation of the model. For example, if the model is of a building, the metadata could specify how components such as walls, doors and windows are to be arranged in the generated model.

Streaming metadata describing the objects from a remote database may comprise streaming metadata describing a subset (i.e. one or more of) a group of objects belonging to a common category (e.g. trees), which may each be labelled with the common category in the data files of the video game. Rendering the group of objects may then be performed based on the metadata streamed for the subset of the group of objects. This achieves a further saving in network bandwidth - rather than streaming similar or identical metadata for each object labelled as "tree", for example, it is sufficient to have metadata describing only a small number of trees.

As noted above, the frame may be rendered in accordance with a rendering pipeline. Preferably, the rendering resource restrictions comprise limitations on the resources available to one or more stages of a rendering pipeline in accordance with which the frame is rendered. For example, the degree to which one or more post processing effects such as ambient occlusion and bloom or the number of reflections computed by a ray tracing stage could be limited.

In some preferred implementations, the rendering resource restrictions comprise a limitation on a texture quality with which one or more of the objects are rendered and/or a limitation on a level of detail, LOD, with which one or more of the objects are rendered. The texture quality here may be defined as the resolution of the texture. By rendering the object with lower-quality textures (e.g. lower-resolution textures), the graphics processing resources required to complete the rendering of the object are reduced. "Level of detail" (LOD) here refers to techniques for limiting the complexity of a 3D model from which an object is rendered, which are capable of reducing the resource overhead required to render the object (since, holding other factors constant, less complex models will generally require less computational effort to render). Typically, two versions of an object with different LODs will differ at least in terms of the number of polygons in the object model (such that the less complex version has fewer polygons).

Determining the one or more rendering resource restrictions may comprise: identifying a first subset of the plurality of objects having importance levels below a threshold importance level; and selecting one or more rendering resource restrictions to be applied to the first subset of the plurality of objects. The rendering resource restrictions would not be applied to objects with importance levels above the threshold importance level. The threshold importance level could be set relative to the importance levels of the objects - for example, it could be set such that a predetermined number of objects are above the threshold (e.g. such that the five most important objects are above the threshold) or such that a predetermined proportion of the objects are above the threshold (e.g. the most important 10% of objects are above the threshold).

Preferably, for one or more of the plurality of objects, several model versions of the object are available, each model version representing the object with a different level of detail; wherein the method further comprises obtaining measurement data representing the frequency with which each model version of each of the one or more objects was rendered during a prior gameplay period of the video game; wherein the importance levels of the one or more objects and/or the rendering resource restrictions applied to the one or more objects are determined based on the measurement data. It will be appreciated that the prior gameplay period takes placed before the steps of assigning the importance levels, determining the rendering resource restrictions and rendering the frame, which are typically performed during a current runtime period of the video game (e.g. a current period of gameplay). In these implementations, the measurement data provides an empirical measure of how often each model version was actually used in a session of gameplay. From this data, it can be inferred how important each object was in practice during the prior gameplay period. For example, if it was measured that a particular scenery object was (unexpectedly) frequently rendered at a high LOD, indicating that the object was often inspected closely, it can be inferred that this object in practice was regarded as important by the players and that it should therefore be assigned a relatively high importance level than would otherwise be selected for comparable scenery objects. It can also be determined from the measurement data that some objects were rarely, or never, rendered at high LODs, based on which it is possible to determined rendering resource restrictions (e.g. on the texture quality used during rendering or the LOD of the object model streamed remotely, in the case where the rendering comprises streaming a model of the object from a remote database).

In these implementations, preferably, obtaining the measurement data comprises capturing the measurement data during the prior gameplay period, in which the video game is played by one or more players. In other words, the measurement data is captured prior to performing the steps of assigning importance levels, determining rendering resource restrictions and rendering the objects (which, as discussed above, typically take place during a current runtime period of the video game).

Preferably the several model versions of each of the one or more objects are stored in a remote database, wherein the rendering of each of the one or more objects comprises streaming one of the model versions from the remote database and rendering the object using the streamed model version, and wherein the rendering resource restrictions to be applied to the one or more objects comprises: preventing streaming of model versions which were rendered during the prior gameplay period with a frequency below a lower threshold frequency or were not rendered during the prior gameplay period; and/or prioritising streaming of the model versions based on the frequency with which each model version was rendered during the prior gameplay period. In these implementations, the model versions representing the different LODs of each object are stored remotely. Conventionally, in this scenario, all the LODs of each object are streamed during runtime because the graphics processor in principle needs to be ready to render each LOD on demand. However, in these implementations of the invention, bandwidth is saved by preventing or deprioritising streaming of model versions for LODs which are in practice infrequently rendered. In the case where the graphics processor is asked to render a LOD that has not been streamed, it may use the nearest available LOD (i.e. the model version which has been streamed with the nearest LOD to the one being requested). The lower threshold frequency may be such that only model versions which were never rendered are not streamed, or such that some model versions which were rendered with non-zero frequencies are also prevented from being streamed. By prioritising streaming of the model versions based on the frequency with which each model version was rendered, it is meant that streaming resources (e.g. network bandwidth) are prioritised for the model versions that were most frequently streamed, which thereby results in streaming of the less frequently-streamed model versions being deprioritised. It will be recognised from the foregoing discussion that different kinds of rendering resource restriction may be employed simultaneously, either such that different kinds of restriction are applied to different types of object or that some individual objects are subject to more than one restriction. In some implementations, the type of restriction(s) applied to each object may be determined based on a class with which the object is labelled (either in the data files of the video game or determined by a technique such as computer vision or machine learning). For example, for one object the rendering resource restriction selected for that object could be that metadata for that object is to be streamed in place of a model while, for another object, the rendering resource restriction may be a restriction on the level of detail of the model from which the object is to be rendered.

The method of this invention is typically computer-implemented, being performed for example by a computer system such as a PC, laptop or games console.

### BRIEF DESCRIPTION OF DRAWINGS

Fig. 1 shows an example of a frame displayed by a video game;
Fig. 2 is a flowchart showing an example of a method of rendering graphics for a video game in accordance with an embodiment of the invention; and
Fig. 3 shows schematically a rendering pipeline suitable for rendering video game graphics.

### DETAILED DESCRIPTION

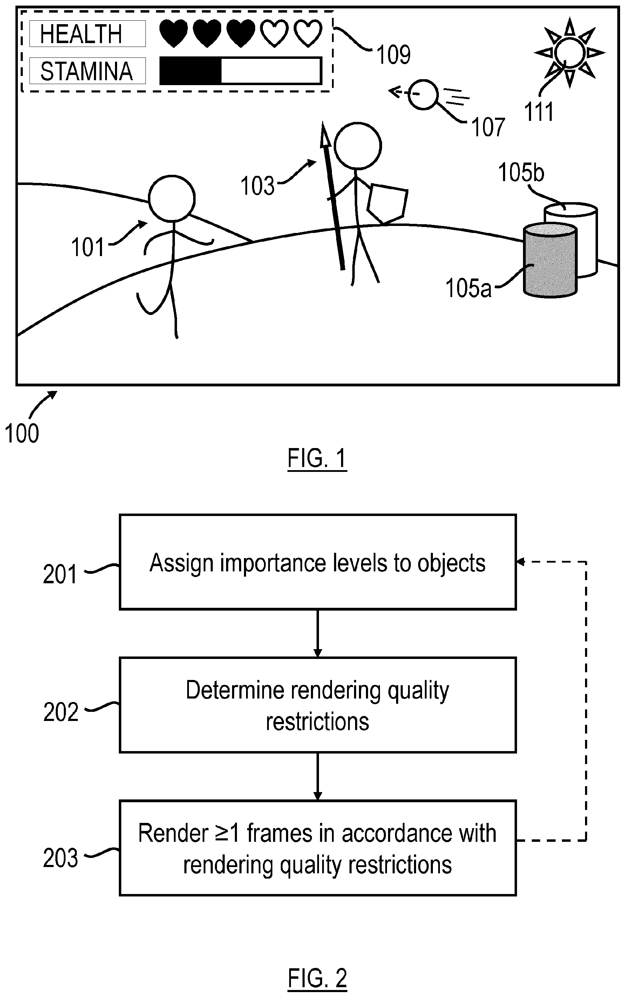

Fig. 1 shows an example of a frame 100 of the real-time graphics of a video game. This frame 100 represent a scenario in which a player-controlled character 101 is moving through an environment that contains various objects, including an NPC 103, a moving projectile 107 and barrels 105a, 105b serving as items of scenery. The frame also includes a head-up display (HUD) 109, which includes a health bar and a stamina bar for the player-controlled character 101. The objects in this frame 100 are exposed to a light source 111. An example of a method in accordance with an embodiment of the invention will now be described with reference to this example frame 100.

Fig. 2 is a flowchart showing the steps of a method of rendering graphic for a video game in accordance with an embodiment of the invention. In a first step 201, importance levels are assigned to each of a plurality of objects in a frame to be rendered. With reference to the frame 100 shown in Fig. 1, the plurality of objects to which importance levels are assigned could be the player-controlled character 101, the NPC 103, the barrels 105a, 105b, projectile 107 and HUD 109, and light source 111. In this example, the importance level will be defined as a numerical parameter having a value in the range of 0 to 100, where 100 signifies the highest possible importance and 0 signifies the lowest possible importance.

One manner of assigning the importance levels of the objects is to refer to metadata with which the objects are tagged, the metadata indicating the respective importance of each object. This metadata could be applied by the developer when designing the game. For example, in the frame 100 of Fig. 1, the character 101 and NPC 103 could be tagged with metadata indicating importance levels of 100, indicating that this NPC 103 is highly important in this frame (e.g. because the player needs to interact with this NPC 103 to progress in the game). The projectile 107 could be an object that the player has to avoid in order not to lose lives, for which reason it is expected that the player will focus a significant amount of attention on this object. The developers therefore might tag the projectile 107 with metadata indicating an importance level of 70. The barrels 105a, 105b here serve as scenery, which is unlikely to attract much attention from the player, so the metadata tagged to these objects indicates an importance level of 30.

Another way of assigning importance levels to the objects, which may be performed as an alternative to or in addition to the metadata-based approach described above, is to determine the importance levels based on physics data associated with the objects. The importance level of an object could be reduced based on physics data indicating any property of the object that reduces the ability of the player to focus their vision on it - for example the movement speed of the object transverse to the frame, its acceleration rate, or its rotational speed. If the physics data is the only factor affecting the assigned importance levels (e.g. when there is no preexisting metadata indicating the importance levels), this could be implemented by giving each object the maximum possible importance by default and then reducing the importance level of each object based on any relevant physics data that applies to it. For example, the projectile 107 is moving quickly across the frame. Its importance level could be reduced in proportion with the speed at which it is moving across the frame, reflecting the fact that faster-moving objects are more difficult to focus on than slower-moving objects.

For the purposes of this example, the physics-data-based modification of the importance levels will be applied in addition to the determination of the importance levels based on tagged metadata. Therefore, the importance level 70 of the projectile indicated by the metadata is modulated to 60 based on determining that the projectile 107 is moving transverse to the frame. The other objects (the character 101, NPC 103, barrels 105a, 105b) are either stationary or sufficiently slow-moving that no modulation of their importance levels is required, so the importance levels of the character 101 and NPC 103 remain at 100 and the importance levels of the barrels 105a, 105b remain at 30. These importance levels will be used for the remainder of this example, but further approaches to determining the importance levels of the objects will now be briefly outlined with reference to the Fig. 1 example.

One further possible way of assigning importance levels to the objects involves determining the importance levels based on the output of one or more stages of a rendering pipeline in accordance with which one or more earlier frames were generated. An example of this is the degree to which one or more post-processing effects are applied to the objects. For example, it can be seen in Fig. 1 that the barrel 105a is occluded from the light source 111 by the other barrel 105b. Therefore, earlier frames featuring the barrel 105a may have applied ambient occlusion to the barrel 105a as a post-processing effect. Since this effect will tend to reduce the brightness of the barrel 105a, making some of its details less perceptible, the level of detail in which the barrel is rendered (e.g. its texture resolution) may be lowered without significantly affecting the perceived visual quality. Similarly, the moving projectile 107 may be subjected to a degree of motion blur as a post-processing effect. Since motion blur will obscure much of the detailed texture of the projectile 107 and indeed its shape, aspects such as its texture resolution and the level of detail of the model from which this projectile 107 is rendered may be reduced (by application of a lower importance level) based on the prior output of a motion blur shader present in the rendering pipeline.

Another possible manner of applying the importance levels involves determining the importance levels based on the distance of the objects from certain other, key objects in the frame 100. For example, it might be expected that the player will spend a lot of time looking at the HUD 109. Consequently, objects far from the HUD 109 or other key objects (e.g. barrels 105a, 105b) will not contribute much to the player's perception of the visual quality of the scene. Therefore, the importance levels of objects could be reduced in a manner that scales with their distance from designated key objects. The key objects could be designated (e.g. by tagging with metadata) during design of the game.

A further possible manner of applying the importance levels is to vary the importance levels on-the-fly based on measurements of the player's vision (e.g. eye-tracking data) relative to a screen on which the graphics are being displayed. Under this approach, the importance levels of objects would be greatest in the region in which the player's vision is instantaneously focused and the importance levels of objects away from this region would be reduced.

Once the importance levels have been assigned, one or more rendering resource restrictions are determined in a second step 202. The purpose of the rendering resource restrictions is to reduce the quantity graphics processing resources expended on rendering details that will not significantly contribute to the player's perception of the visual quality of the rendered scene. One approach to applying selecting the rendering resource restrictions is to set a threshold importance level such that rendering resource restrictions are applied only to objects whose importance levels are below the threshold. In this example, the threshold could be set at 80 (e.g. by applying a rule specifying that a specified proportion of the objects should be above the threshold). In this example, the character 101 and NPC 103 are both assigned the maximum importance level of 100 and are therefore above the threshold and not subjected to any rendering resource restrictions. The projectile 107 and barrels 105a, 105b have assigned importance levels below the threshold, so rendering resource restrictions are applied to these objects. Since the projectile 107 is moving across the frame, a suitable rendering resource restriction for this object is to reduce the resolution of the textures with which the object is rendered, since the player is unlikely to perceive the finer details of a fast-moving texture. The same restriction could be applied to the barrels 105a, 105b, but since the barrels 105a, 105b are assigned lower importance levels than the projectile 107, the severity of the rendering resource restrictions applied to the barrels 105a, 105b may be greater than that applied to the projectile 107.

In some instances, at least some of the objects will be rendered using models that are streamed (over the internet) from a remote server during gameplay. For such objects, one possible form of rendering resource restriction is to select a lower-detail version of the model (in the case in which the database contains several versions of a model for the object, each of a different level of detail) where the object's importance level indicates that the resources employed in rendering it should be restricted. In addition to reduced the computational cost of rendering the object (since rendering a lower-detail model demands fewer graphics processing resources than a higher-detail model), this reduces the network bandwidth required to stream the object's model.

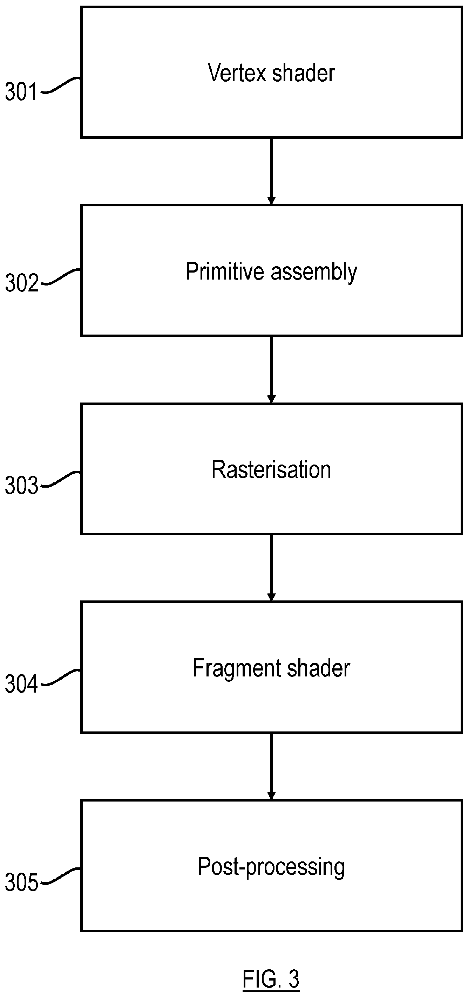

The rendering resource restrictions may comprise limitations on the resources made available to one or more stages of a rendering pipeline in accordance with which the frame is to be rendered. An example of a rendering pipeline is shown in Fig. 3. This pipeline includes a vertex shader 301, a primitive assembly stage 302, a rasterization stage 303, and a fragment shader 304. Limiting the resources available to the rendering pipeline for rendering a particular object could involve restricting the number of vertices generated by the vertex shader for that object. This would reduce the work done by the vertex shader in rendering that object and the subsequent stages of the pipeline. The pipeline also includes a post-processing stage 305, which could comprise effects such as motion blur, bloom and ambient occlusion. The resources available to the post-processing stage 305 could be limited by restricting the degree to which the post-processing effects are applied.

Once suitable rendering resource restrictions have been selected, the frame is rendered in accordance with the rendering resource restrictions in step 203. At least one frame is rendered in accordance with the rendering resource restrictions, but the rendering resource restrictions may remain in place for a certain period of time or a specified number of subsequent, consecutive frames - e.g. the next 0.1 seconds or the next 6 frames. After rendering the specified number of frames or after expiry of the specified time period, the importance levels and rendering resource restrictions may be re-computed (as indicated by the dashed line in Fig. 2).

While the examples described above have concentrated on rendering resource restrictions applied to the stages of a rendering pipeline, as discussed above, other forms of rendering resource restrictions may be applied to the objects. For example, the rendering resource restrictions determined in step 202 may include indications to be applied to one or more of the objects that the models for those objects should be produced based on metadata streamed from a remote database (instead of streaming a complete model for the object). For example, the projectile 107 could be tagged with metadata indicating that its importance level is "unimportant". Therefore, in step 202, the restrictions applied to this object would include an indication that metadata for the object should be streamed from a remote database (rather than a complete model), which would then be used to produce the model in step 203. Producing the model may comprise either retrieving the model from local storage or generating the model based on the metadata, in which case the generating may be performed using a machine learning model which generates the model based on the streamed metadata.

## Claims

1. A method of rendering graphics for a video game, the method comprising:
assigning, to each of a plurality of objects in a frame to be rendered, an importance level of the object;
determining, based on the importance levels, one or more rendering resource restrictions to be applied to at least some of the plurality of objects; and
rendering the frame, wherein the plurality of objects are rendered in accordance with the rendering resource restrictions.

2. The method of claim 1, wherein at least some of the plurality of objects are tagged with metadata representing their respective importance, and wherein the importance level assigned to each of said objects is determined based on the metadata with which said object is tagged.

3. The method of any preceding claim, wherein the importance levels assigned to at least some of the objects are determined based on physics data associated with the objects,
wherein preferably: the physics data comprise at least one of a movement speed of the object, preferably a movement speed of the object transverse to the frame, an acceleration rate of the object, and a rotational speed of the object.

4. The method of any preceding claim, wherein the rendering of the frame is performed in accordance with a rendering pipeline comprising a plurality of stages, wherein the importance level of at least some of the objects is determined based on output data generated by one or more stages of the rendering pipeline generated when rendering one or more earlier frames;
wherein preferably: the output data comprises motion blur data generated for each of the plurality of objects by a motion blur shader stage of the rendering pipeline, and wherein the importance levels assigned to the plurality of objects are such that objects for which the motion blur data indicates a greater relative degree of motion blurring are assigned relatively lower importance values.

5. The method of any preceding claim, wherein the importance levels assigned to at least some of the objects are determined based on the transverse distance between the object and a key object in the frame or a key region of the frame, such that objects at relatively greater transverse distances from the key object are assigned relatively lower importance levels.

6. The method of any preceding claim, wherein the importance levels assigned to at least some of the objects are determined based on measurements of the direction of a player's vision relative to a screen on which the graphics are displayed, the measurements preferably comprising eye tracking data, such that objects at relatively greater distances from the centre of the player's vision are assigned relatively lower importance levels.

7. The method of any preceding claim, wherein models for at least some of the plurality of objects are streamed from a remote database comprising several versions of each of said models, each version of the model for one of the objects having a different level of detail relative to the other versions of said model, and wherein the rendering resource restrictions applied to said objects comprise a limitation on the level of detail of the version of the model that is streamed for the object.

8. The method of any preceding claim, wherein the rendering resource restrictions comprise an indication that, for at least some of the objects to which the rendering resource restrictions are applied, metadata describing the objects is to be streamed from a remote database; and wherein rendering the frame comprises streaming the metadata describing the objects from the remote database, producing a model for the object based on the metadata and rendering the object based on the generated model.

9. The method of claim 8, wherein the streamed metadata comprises one or more of dimensions of the object, colour information of the object, information identifying one or more textures to be applied to the object.

10. The method of claim 8 or claim 9, wherein producing the model for the object comprises retrieving the model from local storage or generating the model based on the metadata;
wherein preferably: generating the model based on the metadata comprises using a machine learning model to generate the model for the object based on the metadata.

11. The method of claim 10, wherein generating the model based on the metadata comprises constructing the model at least in part from a set of model parts stored locally, wherein preferably the metadata defines one or more of spatial transformations, colours and textures to be applied to the model parts during generation of the model.

12. The method of any preceding claim, wherein the rendering resource restrictions comprise:
limitations on the resources available to one or more stages of a rendering pipeline in accordance with which the frame is rendered, and/or
a limitation on a texture quality with which one or more of the objects are rendered and/or a limitation on a level of detail, LOD, with which one or more of the objects are rendered.

13. The method of any preceding claim, wherein determining the one or more rendering quality restrictions comprise:
identifying a first subset of the plurality of objects having importance levels below a threshold importance level; and
selecting one or more rendering resource restrictions to be applied to the first subset of the plurality of objects.

14. The method of any preceding claim, wherein, for one or more of the plurality of objects, several model versions of the object are available, each model version representing the object with a different level of detail, LOD;
wherein the method further comprises obtaining measurement data representing the frequency with which each model version of each of the one or more objects was rendered during a prior gameplay period of the video game;
wherein the importance levels of the one or more objects and/or the rendering resource restrictions applied to the one or more objects are determined based on the measurement data;
wherein preferably: obtaining the measurement data comprises capturing the measurement data during the gameplay period, in which the video game is played by one or more players.

15. The method of claim 14, wherein the several model versions of each of the one or more objects are stored in a remote database, wherein the rendering of each of the one or more objects comprises streaming one of the model versions from the remote database and rendering the object using the streamed model version, and wherein the rendering resource restrictions to be applied to the one or more objects comprises:
preventing streaming of model versions which were rendered during the prior gameplay period with a frequency below a threshold frequency or were not rendered during the prior gameplay period; and/or
prioritising streaming of the model versions based on the frequency with which each model version was rendered during the prior gameplay period.
